# EUROPÄISCHE PATENTSCHRIFT

(11) **EP 0 700 486 B1**
(45) Veröffentlichungstag und Bekanntmachung des Hinweises auf die Patenterteilung: **10.10.2001**
(21) Anmeldenummer: 94919608.3
(22) Anmeldetag: 06.06.1994
(51) Int. Cl.: F16D 65/097

(54) **SCHWIMMSATTEL-SCHEIBENBREMSE FÜR KRAFTFAHRZEUGE**
FLOATING CALIPER DISC BRAKE FOR MOTOR VEHICLES
FREIN A DISQUES A ETRIER FLOTTANT POUR AUTOMOBILES

(30) Priorität: 05.06.1993 DE 4318744
(43) Veröffentlichungstag der Anmeldung: 13.03.1996
(73) Patentinhaber: Continental Teves AG & Co. oHG, 60488 Frankfurt (DE)
(72) Erfinder: WEILER, Rolf, D-65817 Eppstein 2 (DE); BIERÄUGEL, Dieter, D-61194 Niddatal 3 (DE); STÖRZEL, Karl, D-63303 Dreieich (DE); SCHIEL, Wolfgang, D-65936 Frankfurt am Main (DE)
(86) Internationale Anmeldenummer: EP9401824
(87) Internationale Veröffentlichungsnummer: WO9429611

(56) Entgegenhaltungen:
- WO-A-91/08401
- WO-A-92/18785
- WO-A-93/09359
- DE-A- 3 815 733
- FR-A- 2 296 127
- GB-A- 2 024 348
- GB-A- 2 159 221

## Beschreibung

Die Erfindung betrifft eine Schwimmsattel-Scheibenbremse für Kraftfahrzeuge mit einem Bremsträger, der integraler Bestandteil des Achsschenkels des Fahrzeugs ist, gemäß dem Oberbegriff des Patentanspruchs 1.

Eine gattungsgemäße Scheibenbremse ist aus der DE-A-38 15 733 bekannt. Diese bekannte Scheibenbremse besitzt einen Schwimmsattel, der mittels zweier Bolzenführungen am Achsschenkel verschiebbar geführt ist. Die beiden Bolzenführungen stellen zwei Abstützpunkte für den Schwimmsattel auf der inneren Axialseite dar. Zur ergänzenden Abstützung des Schwimmsattels auf der äußeren Axialseite dient die Rückenplatte des äußeren Bremsbelags. Dabei ist der Schwimmsattel entweder auf einem mittleren Vorsprung des Bremsbelags als dritter Abstützpunkt oder an in Umfangsrichtung seitlichen Vorsprüngen der Rückenplatte in Form einer Vier-Punkt-Abstützung gelagert. Der Bremsbelag ist seinerseits an Trägerarmen eines integrierten Bremsträgers abgestützt. Weiterhin ist der Schwimmsattel gegenüber den Trägerarmen mittels einer Drahtfeder in radialer Richtung verspannt, um ein Klappern zu verhindern. Der Schwimmsattel wird von der Drahtfeder radial nach innen starr gegen die Rückenplatte des Bremsbelags und diese wiederum starr an die Trägerarme angedrückt. Eine radial federnde Bewegungsmöglichkeit des Schwimmsattels gegenüber dem Bremsbelag ist nicht vorgesehen. Zwar ist der äußere Bremsbelag mittels einer Blattfeder am Schwimmsattel lösbar befestigt, wobei diese Blattfeder auch eine radial fe- dernde Federzunge aufweist, jedoch ist diese Federzunge beim äußeren Bremsbelag ohne Funktion und nur deshalb vorhanden, damit der äußere und der innere Bremsbelag gleich ausgebildet sein können.

Da bei einer gattungsgemäßen Scheibenbremse die Trägerarme integraler Bestandteil des Achsschenkels des Fahrzeugs sind, müssen die Bremsbeläge und der Schwimmsattel im Rahmen der Endmontage des Fahrzeugs beim Fahrzeughersteller eingebaut werden. Diese Endmontage muß möglichst einfach gehalten sein. Der Schwimmsattel wird daher zusammen mit den Bremsbelägen als vormontierte Einheit vom Bremsenhersteller zur Endmontage an den Fahrzeughersteller geliefert. Die bekannte Schwimmsattel-Scheibenbremse hat nun aber den Nachteil, daß nach der Befestigung des Schwimmsattels mittels der beiden Bolzenführungen noch die Drahtfeder zwischen Schwimmsattel und Bremsträger verspannt werden muß. Dadurch wird insbesondere eine wünschenswerte automatische Montage des Schwimmsattels am Fahrzeugrad erheblich kompliziert.

Aufgabe der Erfindung ist es, eine Schwimmsattel-Scheibenbremse anzugeben, die einfach aufgebaut, kostengünstig zu fertigen und in einfacher Weise am Fahrzeugrad insbesondere automatisch montierbar ist.

Die erfindungsgemäße Lösung ergibt sich aus dem kennzeichnenden Teil des Patentanspruchs 1 und besteht im Prinzip darin, eine zur Befestigung des äußeren Bremsbelags vorgesehene Blattfeder gleichzeitig zum radialen Verspannen des Schwimmsattels gegenüber dem Bremsträger zu verwenden. Dabei kann die im Stand der Technik noch erforderliche Drahtfeder eingespart werden. Die erfindungsgemäße Lösung hat den Vorteil, daß die Material- und Fertigungskosten sowie das Gewicht der Bremse verringert werden. Ein besonderer Vorteil besteht aber darin, daß der Schwimmsattel nach der Befestigung der Bolzenführungen automatisch gegenüber dem Bremsträger vorgespannt ist, so daß entsprechende Montageschritte wegfallen und durch diese Vereinfachung insbesondere eine automatische Montage wesentlich vereinfacht wird. Dabei wird die radiale Vorspannung des Bremsbelags gegenüber dem Schwimmsattel auf vorteilhaft einfache Weise durch geringfügige Abänderungen an einer bekannten Anordnung erzielt. Die erfindungsgemäßen Maßnahmen verursachen keine zusätzlichen Fertigungskosten. Die Vertiefungen in der Wand der Ausnehmung am äußeren Gehäuseschenkel können mit ihren radialen Anschlägen ohne weiteres beim Gießen des Schwimmsattels angeformt werden.

Vorzugsweise befindet sich gemäß Anspruch 2 der zur radialen Vorspannungen dienende Andruckpunkt der Federzunge in ummittelbarer Nähe der Rückenplatte des Bremsbelags. Dadurch wird sichergestellt, daß der Bremsbelag von Kippmomenten weitgehend frei bleibt, wodurch er gegen Verkippen aus seiner korrekten Einbaulage gesichert ist. Dabei ist eine Form der Federzunge gemäß Anspruch 3 besonders einfach und funktionell, wobei je nach Erfordernis an die Steifigkeit die Federzunge entweder V-förmig oder W-förmig gebogen ist. Die W-förmige Federzunge ist länger und daher weicher in der Federcharakteristik.

Im Hinblick auf Lagerhaltung und Lieferung von Bremsbelägen ist es besonders vorteilhaft, wenn der innere Bremsbelag und der äußere Bremsbelag gemäß Anspruch 4 gleich ausgebildet sind und die Bremse durch entsprechende Maßnahmen für die Verwendung von gleichen Bremsbelägen geeignet ist.

In einer vorteilhaften Weiterbildung der Erfindung gemäß Anspruch 5 oder 6 wird die Beweglichkeit des Bremsbelags in Umfangsrichtung zur Säuberung der Abstützungen an den Trägerarmen von Korrosionsprodukten ausgenutzt. Der Bremsbelag ist mittels seiner Blattfeder in Umfangsrichtung zwischen den Anlageflächen der Trägerarme zentriert. Bei jeder Bremsbetätigung wird der Bremsbelag von der Bremsscheibe in Umfangsrichtung mitgenommen und gegen den bremsscheibenauslaufseitigen Trägerarm gedrückt. Dabei verdreht er sich geringfügig und erzeugt eine schabende Bewegung, die die Anlageflächen an den Trägerarmen und der Rükkenplatte des Bremsbelags von Korrosionsprodukten befreit. Nach jeder Bremsbetätigung sorgt die Vorspannung der Verankerungszungen der Blattfeder für eine erneute Zentrierung des Bremsbelags.

Ausführungsbeispiele der Erfindung werden nachfolgend anhand der Zeichnungen näher erläutert.

Es zeigen:
- Fig. 1: Eine teilweise geschnittene Seitenansicht einer am Fahrzeug montierten erfindungsgemäßen Schwimmsattel-Scheibenbremse,
- Fig. 2: eine gemäß Linie A - A von Fig. 1 teilweise geschnittene Ansicht derselben Scheibenbremse,
- Fig. 3: eine geschnittene Teilansicht entsprechend Fig. 2 mit einer modifizierten Blattfeder,
- Fig. 4: eine Draufsicht auf einen erfindungsgemäßen Bremsbelag,
- Fig. 5: eine perspektivische Ansicht desselben Bremsbelags,
- Fig. 6: Teilansichten des Befestigungspunktes der Blattfeder a) vor b) nach dem Vernieten.

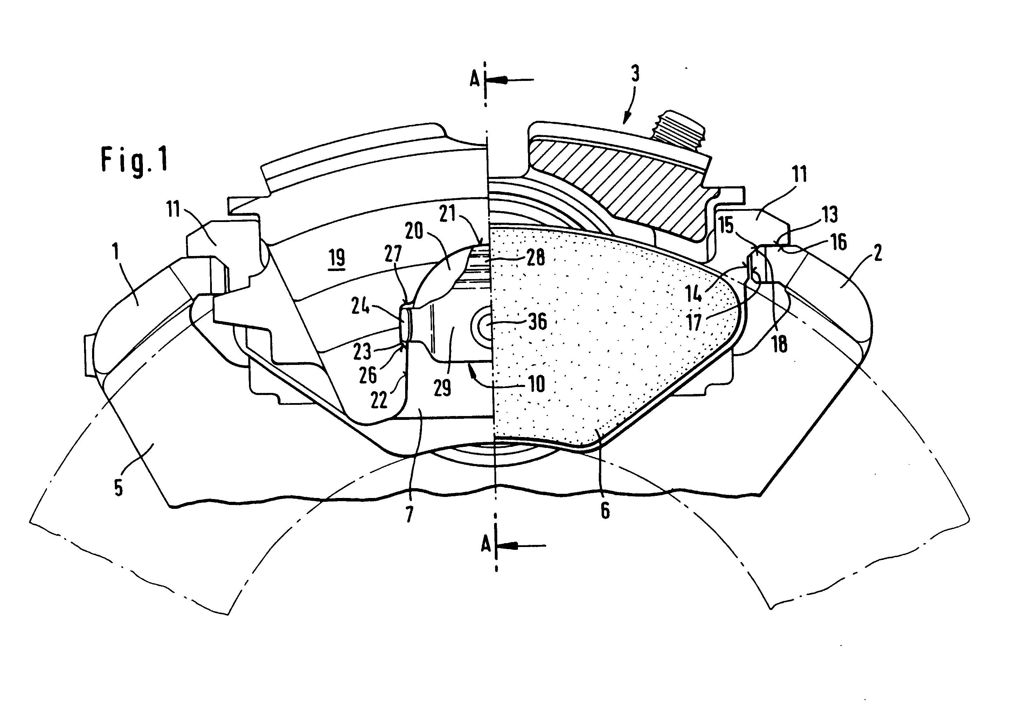

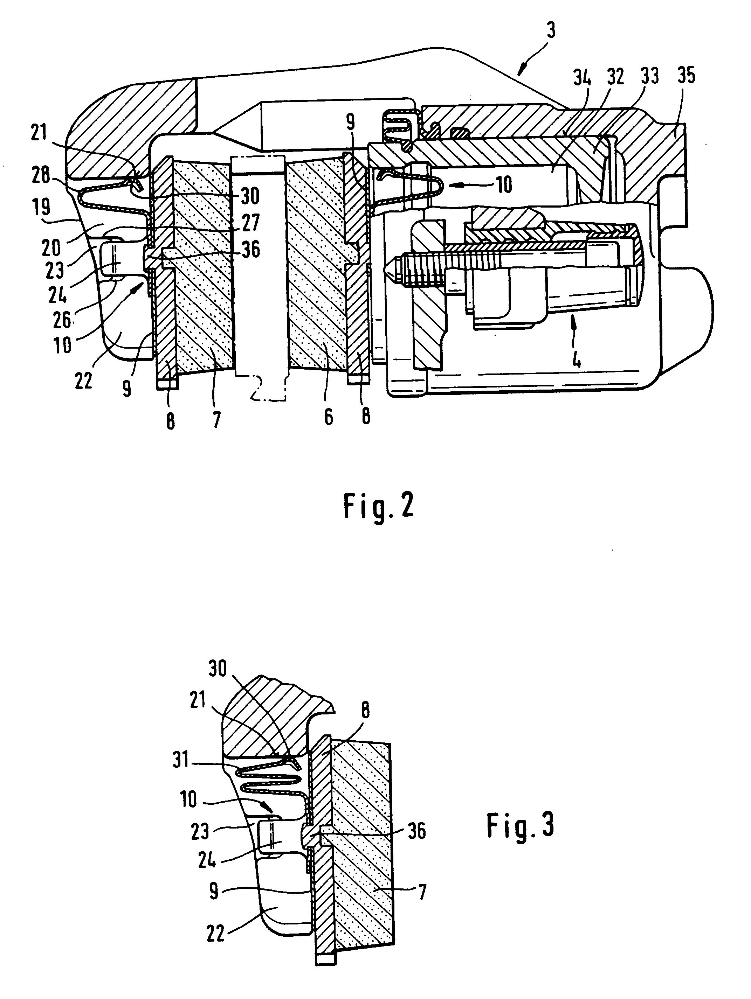

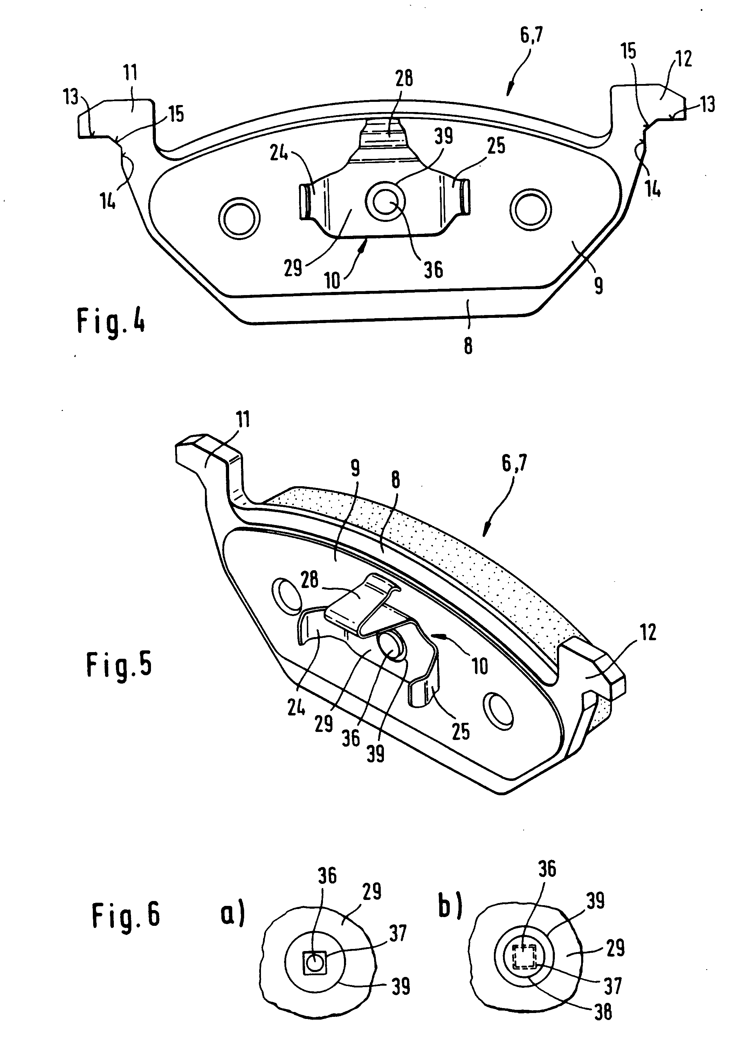

In den Fig.1 und 2 ist eine Schwimmsattel-Scheibenbremse für Kraftfahrzeuge dargestellt, deren Bremsträger mit den Trägerarmen 1,2 in den nicht näher dargestellten Achsschenkel des Fahrzeugs integriert ist. Am Bremsträger ist ein Schwimmsattel 3 mittels zweier Bolzenführungen 4 axial verschiebbar gelagert. Der Schwimmsattel 3 umgreift den äußeren Rand einer Bremsscheibe 5 und zwei Bremsbeläge 6, 7, die gleich ausgestaltet sind und im übrigen in den Fig. 4 u. 5 einzeln dargestellt sind.

Jeder Bremsbelag 6, 7 besitzt eine einen Reibbelag tragende Rückenplatte 8, auf deren Rückseite ein Dämpfungsblech 9 und eine Blattfeder 10 befestigt sind. Die Rückenplatte 8 besitzt zwei in entgegengesetzte Umfangsrichtung abstehende, L-förmige Vorsprünge 11, 12. Jeder Vorsprung 11, 12 besitzt eine Auflagefläche 13, eine senkrecht dazu angeordnete Abstützfläche 14 und eine schräge Fläche 15, die an ihrer einen Seite in die Auflagefläche 13 und an ihrer anderen Seite in die Abstützfläche 14 übergeht. Die Trägerarme 1, 2 weisen entsprechende Flächen auf, wobei die Auflageflächen 16 zur Anlage an die Auflageflächen 13, die Abstützfläche 17 zur Anlage an die Abstützflächen 14 und die schrägen Flächen 18 zur Anlage an die schrägen Flächen 15 bestimmt sind.

Der axial äußere Bremsbelag 7 ist außerdem an einem äußeren Gehäuseschenkel 19 des Schwimmsattels 3 mittels der Blattfeder 10 lösbar befestigt. Der äußere Gehäuseschenkel 19 weist eine U-förmige Ausnehmung 20 auf, die aus einem mittleren Wandabschnitt 21 und zwei angrenzenden, in Umfangsrichtung gegenüberliegenden Wandabschnitten 22 besteht. Die gegenüberliegenden Wandabschnitte 22 sind jeweils mit einer Vertiefung 23 versehen, in die zwei Verankerungszungen 24, 25 der Blattfeder 10 eingreifen und dabei den Bremsbelag 7 in axialer Richtung gegen den äußeren Gehäuseschenkel 19 drücken. Auf diese Weise ist der äußere Bremsbelag 7 lösbar am Schwimmsattel 3 befestigt.

Die Vertiefungen 23 besitzen jeweils einen radial inneren Anschlag 26 und einen radial äußeren Anschlag 27, deren Abstand größer ist als die Breite der Verankerungszungen 24, 25. Die Verankerungszungen 24, 25 sind also zwischen den Anschlägen 26, 27 radial verschiebbar, so daß insgesamt der äußere Bremsbelag 7 gegenüber dem Schwimmsattel 3 radial verschiebbar gehalten ist. Eine mittlere Federzunge 28 der Blattfeder 10 liegt radial federnd an dem mittleren Wandabschnitt 21 der U-förmigen Ausnehmung 20 an, so daß der äußere Bremsbelag 7 am äußeren Gehäuseschenkel 19 elastisch abgestützt und gegenüber dem Schwimmsattel 3 in radialer Richtung vorgespannt ist.

Die Blattfeder 10 hat einen Befestigungsabschnitt 29, der auf der Rückseite der Rückenplatte 8 mit dem Bremsbelag 6, 7 vernietet ist. Der Befestigungsabschnitt 29 geht in Umfangsrichtung in die Verankerungszungen 24, 25 über, die schräg von der Rückenplattenebene abstehen. Weiterhin geht von einer radialen Seite des Befestigungsabschnittes 29 die Federzunge 28 aus, die V-förmig im wesentlichen in axialer Richtung nach außen und wieder zurück nach innen gebogen ist. Aufgrund dieser Formgebung liegt der Andruckpunkt 30 der Federzunge 28 in unmittelbarer Nähe der Rückenplatte 8 des Bremsbelags 6, 7. Diese Anordnung wurde gewählt, um das durch die am Andruckpunkt 30 angreifende Vorspannkraft erzeugter Kippmoment möglichst klein zu halten.

In Fig. 3 erkennt man eine modifizierte Federzunge 31, die ebenfalls vom Befestigungsabschnitt 29 der Blattfeder 10 ausgeht, aber W-förmig gebogen ist. Der Andruckpunkt 30 zum Andruck an den mittleren Wandabschnitt 21 befindet sich wieder an derselben Stelle wie beim vorangehenden Ausführungsbeispiel. Im Gegensatz zu der V-förmigen Federzunge 28 ist die W-förmige Federzunge 31 länger und weist eine weichere Federcharakteristik auf. Die W-förmige Federzunge 31 wird man vorzugsweise dann vorsehen, wenn die Vorspannung einer V-förmigen Federzunge 28 zu groß ist und eine weichere Abstützung des Schwimmsattels 3 auf dem äußeren Bremsbelag 7 gewünscht wird.

Um den Vorteil geringerer Lagerhaltung für Ersatzteile und einer einfachen Montage zu erreichen, sind der innere Bremsbelag 6 und der äußere Bremsbelag 7 gleich ausgeführt. Insbesondere sind die Blattfedern 10 gleich ausgebildet. Der innere Bremsbelag 6 ist in ähnlicher Weise wie der äußere Bremsbelag 7 lösbar befestigt, indem die Blattfeder 10 mit ihren Verankerungszungen 24, 25 und der Federzunge 28 in den Innenraum 32 eines hohlen Bremskolbens 33 federnd eingreift. Der Bremskolben 33 ist in einer Bohrung 34 eines inneren Gehäuseschenkels 35 axial verschiebbar angeordnet. Der Innendurchmesser des Innenraums 32 entspricht dem der U-förmigen Ausnehmung 20, so daß gleiche Bremsbeläge mit 6, 7 mit gleichen Blattfedern 10 in gleicher Weise sowohl am äußeren Gehäuseschenkel 19 als auch am Bremskolben 33 befestigt werden können.

Die Verankerungszungen 24, 25 der Blattfeder 10 erfüllen noch eine weitere wichtige Aufgabe im Zusammenhang mit der Abstützung der Bremsbeläge 6, 7. Durch die Vorspannung der Verankerungszungen 24, 25 in Umfangsrichtung werden die Bremsbeläge 6, 7 in Umfangsrichtung in einer definierten Ruhelage gehalten. Nach einer Auslenkung aus der Ruhelage in Umfangsrichtung werden die Bremsbeläge 6, 7 stets von einer der Verankerungszungen 24, 25 elastisch in die Ruhelage zurückgeschoben. Bei nichtbetätigter Bremse nehmen die Bremsbeläge 6, 7 ihre Ruheposition ein, so daß die L-förmigen Vorsprünge nur mit ihren schrägen Flächen 15 an den schrägen Flächen 18 der Trägerarme 1, 2 abgestützt sind. Zwischen den Auflageflächen 13 der Vorsprünge 11, 12 und den Auflageflächen 16 der Trägerarme 1, 2 stellt sich in diesem Fall ein kleiner Abstand ein. Auch zwischen den Abstützflächen 14 der Vorsprünge 11, 12 und den Abstützflächen 17 der Trägerarme 1, 2 ist jeweils ein kleiner Abstand vorgesehen. Bei Betätigung der Bremse werden die Bremsbeläge 6, 7 von der Bremsscheibe 5 in Umfangsrichtung mitgenommen, bis die scheibenauslaufseitige Abstützfläche 14 an der zugehörigen Abstützfläche 17 anliegt. Dabei gleitet die schräge Fläche 15 des bremsscheibenauslaufseitigen Vorsprungs 11 oder 12 auf der schrägen Fläche 18 des zugehörigen Trägerarms 1 bzw. 2 hinauf und der Abstand zwischen der Auflagefläche 13 des bremsscheibenauslaufseitigen Vorsprungs 11 bzw. 12 und der Auflagefläche 16 des zugehörigen Trägerarms 1 bzw. 2 vergrößert sich. Umgekehrt verkleinert sich der Abstand zwischen den Auflageflächen 13 und 16 und vergrößert sich der Abstand bei den Abstützflächen 14 und 17 auf der Bremsscheibeneinlaufseite. Dabei wird der Bremsbelag 6, 7 geringfügig um eine senkrecht auf der Rückenplatte 8 stehende Achse gedreht. Nach dem Lösen der Bremse kehren die Bremsbeläge 6, 7 in ihre Ruhestellung zurück. Bei einer Bremsung in umgekehrter Drehrichtung der Bremsscheibe 5 werden selbstverständlich die Bremsbeläge 6, 7 geringfügig in die entgegengesetzte Drehrichtung verdreht.

Diese Bewegung der Bremsbeläge 6, 7 hat den Vorteil, daß eventuell entstandene Korrosionsprodukte aufgrund der mahlenden Bewegung der L-förmigen Vorsprünge 11, 12 zwischen den Auflageflächen 13 und 16, den Abstützflächen 14 und 17, und zwischen den schrägen Flächen 15 und 18 zermahlen und abgerieben werden. Die Führung und Abstützung der Bremsbeläge 6, 7 an den Trägerarmen 1, 2 bleibt daher stets korrosionsfrei und leichtgängig.

Zur Befestigung der Blattfeder 10 am Bremsbelag 6, 7 ist eine Durchstellung 36 der Rückenplatte 8 vorgesehen, die axial aus der Rückenplattenebene herausgeformt ist. Wie man am besten in Fig. 6a erkennt, hat die Durchstellung 36 vor dem Vernieten einen runden Querschnitt. Der Befestigungsabschnitt 29 ist in seiner Mitte mit einer quadratischen Öffnung 37 versehen, die zum Durchgang der Durchstellung 36 bestimmt ist. Bei der Fertigung des Bremsbelags 6, 7 wird die Blattfeder 10 mit ihrer Öffnung 37 auf die runde Durchstellung 36 aufgesteckt und bezüglich der Orientierung der Verankerungszungen 24, 25 und der Federzunge 28 in die korrekte Winkelposition gebracht. Anschließend wird die Durchstellung 36 durch eine Taumelnietung verformt, wobei das Material seitlich in die Öffnung 37 bis an die vier Kanten gedrückt wird. Dabei nimmt die Durchstellung 36 im Bereich der quadratischen Öffnung 37 ebenfalls einen annähernd quadratischen Querschnitt ein und zwischen den Flächen der Durchstellung 36 und den Kanten der quadratischen Öffnung wird ein Formschluß erzeugt, der ein Verdrehen der Blattfeder 10 gegenüber dem Bremsbelag 6, 7 verhindert. Der über den Bereich der quadratischen Öffnung 37 hinausreichende Kopf 38 der Durchstellung 36 wird bei der Taumelnietung zu einem runden Querschnitt verformt und hält anschließend die Blattfeder 10 in axialer Richtung fest an die Rückenplatte 8 gepresst.

Um eine Verformung des Befestigungsabschnittes 29, die zu einer Verbiegung der Verankerungszungen 24, 25 oder der Federzunge 28 führen könnte, zu vermeiden, ist im Bereich der quadratischen Öffnung 37 ein kreisrunder Absatz 39 vorgesehen.

## Patentansprüche

1. Schwimmsattel-Scheibenbremse für Kraftfahrzeuge, mit einem im Achsschenkel des Fahrzeugs integrierten Bremsträger, an dem zwei Bremsbeläge (6, 7) axial verschiebbar geführt und zur Übertragung der beim Bremsen auftretenden Umfangskräfte abgestützt sind, mit einem am Achsschenkel verschiebbar geführten Schwimmsattel (3), der den Rand der Bremsscheibe (5) und die Bremsbeläge (6, 7) U-förmig umgreift, wobei zumindest der axial äußere Bremsbelag (7) eine an seiner Rückenplatte (8) befestigte Blattfeder (10) aufweist und mittels Zungen (24), 25, 28,31) der Blattfeder (10) an einem äußeren Gehäuseschenkel (19) des Schwimmsattels (3) lösbar, axial befestigt ist, mit einer U-förmigen Ausnehmung (20) des äußeren Gehäuseschenkels (19), an deren in Umfangsrichtung gegenüberliegenden Wandabschnitten (22) zwei Vertiefungen (23) angeordnet sind, in die zwei Verankerungszungen (24, 25) der Blattfeder (10) unter axialer Vorspannung eingreifen und so den äußeren Bremsbelag (7) gegen den äußeren Gehäuseschenkel (19) drücken und verankern, **dadurch gekennzeichnet, daß** die Vertiefungen (23) jeweils einen radial äußeren Anschlag (27) und einen radial inneren Anschlag (26) aufweisen, deren Abstand größer ist als die Breite der Verankerungszungen (24, 25), so daß die Verankerungszungen (24, 25) zwischen den Anschlägen (26, 27) radial verschiebbar sind und damit der äußere Bremsbelag (7) radial verschiebbar gegenüber dem Schwimmsattel (3) angeordnet ist, daß der äußere Gehäuseschenkel (19) mittels einer radial federnd an einem mittleren Wandabschnitt (21) der U-förmigen Ausnehmung (20) anliegenden Federzunge (28) der Blattfeder (10) am äußeren Bremsbelag (7) elastisch, radial abgestützt ist, wodurch mittels der Blattfeder (10) der äußere Bremsbelag (7), der äußere Gehäuseschenkel (19) und der integrierte Bremsträger gegeneinander radial vorgespannt sind.

2. Scheibenbremse nach Anspruch 1, **dadurch gekennzeichnet, daß** der Andruckpunkt (30) der Federzunge (28, 31) in unmittelbarer Nähe der Rückenplatte (8) des Bremsbelags (6, 7) angeordnet ist.

3. Scheibenbremse nach Anspruch 2, **dadurch gekennzeichnet, daß** die Federzunge (28, 31) von einem an der Rückenplatte (8) vernieteten Befestigungsabschnitt (29) der Blattfeder (10) ausgehend V-förmig oder W-förmig gebogen ist.

4. Scheibenbremse nach einem der vorhergehenden Ansprüche, **dadurch gekennzeichnet, daß** die Ausnehmung (20) des äußeren Gehäuseschenkels (19) und der Innenraum (32) eines in einer Bohrung (34) des inneren Gehäuseschenkels (35) gleitenden hohlen Bremskolbens (33) gleiche Innendurchmesser aufweisen und daß der innere Bremsbelag (6) und der äußere Bremsbelag (7) gleich ausgebildet sind, wobei der innere Bremsbelag (6) mit seiner Blattfeder (10) in den hohlen Bremskolben (33) eingreift und dort lösbar befestigt ist.

5. Scheibenbremse nach einem der vorhergehenden Ansprüche, **dadurch gekennzeichnet, daß** die Rückenplatte (8) des Bremsbelags (6, 7) zwei in entgegengesetzte Umfangsrichtungen abstehende, L-förmige Vorsprünge (11, 12) aufweist, mit denen der Bremsbelag (6, 7) zwischen Trägerarmen (1, 2) des integrierten Bremsträgers mit Spiel abgestützt ist, und daß sowohl die Vorsprünge (11, 12) als auch die Trägerarme (1, 2) mit aneinander anliegenden schrägen Flächen (15, 18) versehen sind, so daß innerhalb des Spiels der Bremsbelag (6, 7) bei einer geringfügigen Bewegung in Umfangsrichtung um eine zur Rückenplatte (8) senkrechte Achse gedreht wird.

6. Scheibenbremse nach Anspruch 5, **dadurch gekennzeichnet, daß** der Bremsbelag (6, 7) mittels in entgegengesetzte Umfangsrichtungen wirkender Vorspannungen der Verankerungszungen (24, 25) in der Mitte des durch das genannte Spiel vorgegebenen Bereichs zwischen den Trägerarmen (1 und 2) zentriert ist, wenn die Bremse nicht betätigt wird.

## Claims

1. A floating caliper-type disk brake for automotive vehicles comprising a brake carrier integrated in the steering knuckle of the vehicle on which are guided, in an axially displaceable way, two brake pads (6,7), with the said brake pads being supported for transmitting the circumferential forces generated during braking, further comprising a floating caliper (3) displaceably guided on the steering knuckle and embracing, in a U-shaped way, the edge of the brake disk (5) and the brake pads (6,7), with at least the axially outer brake pad (7) including a leaf spring (10) attached to the back plate (8) thereof and being detachably fixed by means of tongues (24, 25, 28, 31) of the leaf spring (10) to an outer caliper knuckle (19) of the floating caliper (3), including a U-shaped recess (20) of the outer caliper knuckle (19) on the wall sections (22) of which oppositely arranged in the circumferential direction are two depressions (23) engaged by two anchoring tongues (24,25) of the leaf spring (10) under an axial prestress, thereby forcing the outer brake pad (7) against the outer knuckle (19) and anchoring the same,
**characterized in that** the depressions (23) each include a radially outer stop (27) and a radially inner stop (26), with the space between them exceeding the width of the anchoring tongues (24,25) so that the anchoring tongues (24,25) are radially displaceable between the stops (26,27) and, hence, the outer brake pad (7) is radially displaceably arranged vis-à-vis the floating caliper (3), **in that** the outer caliper knuckle (19) is radially supported elastically on the outer brake pad (7) by means of a spring tongue (28) of the leaf spring (10) which abuts in a radially resilient manner on a central wall section (21) of the U-shaped recess (20), whereby the outer brake pad (7), the outer knuckle (19), and the integrated brake carrier are radially prestressed in relation to each other by means of the leaf spring (10).

2. Disk brake according to claim 1, **characterized in that** the contact point (30) of the spring tongue (28,31) is arranged in the immediate vicinity of the back plate (8) of the brake pad (6,7).

3. Disk brake according to claim 2, **characterized in that** the spring tongue (28,31), emerging from a mounting section (29) of the leaf spring (10) riveted to the back plate (8), is bent in a V-shape or W-shape manner.

4. Disk brake according to any one of the preceding claims,
**characterized in that** the recess (20) of the outer caliper knuckle (19) and the interior (32) of a hollow brake piston (33) sliding within a bore (34) of the inner caliper knuckle (35) are of identical inside diameters, and **in that** the inner brake pad (6) and the outer brake pad (7) are identically designed, with the inner brake pad (6) with the leaf spring (10) thereof engaging the hollow brake piston (33) and being detachably secured therein.

5. Disk brake according to any one of the preceding claims,
**characterized in that** the back plate (8) of the brake pad (6,7) comprises two L-shaped projections (11,12) projecting in opposite circumferential directions, with the L-shaped projections supporting, with play, the brake pad (6,7) between the carrier arms (1,2) of the integrated brake carrier, and **in that** both the projections (11,12) and the carrier arms (1,2) are provided with oblique faces (15,18) in abutting relationship such that, within the play, the brake pad (6,7) upon a minor movement in the circumferential direction is rotated about an axis normal to the back plate (8).

6. Disk brake according to claim 5, **characterized in that** the brake pad (6,7) by means of prestresses of the anchoring tongues (24, 25) acting in opposite circumferential directions are centered midway of the range between the carrier arms (1 and 2) predetermined by the afore-mentioned play, once the brakes are not applied.

## Revendications

1. Frein à disque à étrier flottant pour véhicule automobile, comprenant un support de frein, qui est intégré dans la fusée d'essieu du véhicule et sur lequel deux garnitures de frein (6, 7) sont guidées de façon à pouvoir être déplacées axialement et sont appliquées pour transmettre les forces circonférentielles se présentant lors du freinage, un étrier flottant (3), qui est guidé de façon à pouvoir se déplacer sur la fusée d'essieu et qui chevauche suivant une forme en U le bord du disque de frein (5) et les garnitures de frein (6, 7), tandis qu'au moins la garniture de frein axialement extérieure (7) comporte un ressort à lame (10) fixé sur sa plaquette de support (8) et est fixée axialement, d'une manière amovible, au moyen de pattes (24, 25, 28, 31) du ressort à lame (10), sur une branche de boîtier extérieure (19) de l'étrier flottant (3), et un évidement (20) en U de la branche de boîtier extérieure (19) sur des sections de paroi (22) qui se font face suivant la direction circonférentielle duquel sont ménagées deux parties en retrait (23) dans lesquelles deux pattes d'ancrage (24, 25) du ressort à lame (10) s'emboîtent sous une précontrainte axiale et appliquent ainsi et ancrent la garniture de frein extérieure (7) sur la branche de boîtier extérieure (19), **caractérisé en ce que** les parties en retrait (23) comportent chacune une butée radialement extérieure (27) et une butée radialement intérieure (26) dont la distance est supérieure à la largeur des pattes d'ancrage (24, 25), de sorte que les pattes d'ancrage (24, 25) peuvent être déplacées radialement entre les butées (26, 27) et qu'ainsi, la garniture de frein extérieure (7) est disposée de façon à pouvoir être déplacée radialement vis-à-vis de l'étrier flottant (3), et **en ce que** la branche de boîtier extérieure (19) est appliquée radialement d'une manière élastique sur la garniture de frein extérieure (7) au moyen d'une patte élastique (28) du ressort à lame (10) qui est en appui élastique radial sur une section de paroi (21) centrale de l'évidement (20) en U, de sorte qu'au moyen du ressort à lame (10), la garniture de frein extérieure (7), la branche de boîtier extérieure (19) et le support de frein intégré sont soumis à une précontrainte radiale d'une manière mutuelle entre ceux-ci.

2. Frein à disque suivant la revendication 1, **caractérisé en ce que** le point d'appui (30) de la patte élastique (28, 31) est situé au voisinage immédiat de la plaquette de support (8) de la garniture de frein (6, 7).

3. Frein à disque suivant la revendication 2, **caractérisé en ce que** la patte élastique (28, 31) est pliée en V ou en W en partant d'une section de fixation (29) du ressort à lame (10) qui est rendue solidaire de la plaquette de support (8) par rivetage.

4. Frein à disque suivant l'une des revendications précédentes, **caractérisé en ce que** l'évidement (20) de la branche de boîtier extérieure (19) et la cavité (32) d'un piston de frein (33) creux qui glisse dans un alésage (34) de la branche de boîtier intérieure (35) ont des diamètres intérieurs identiques et **en ce que** la garniture de frein intérieure (6) et la garniture de frein extérieure (7) ont un agencement identique, la garniture de frein intérieure (6)s'emboîtant par son ressort à lame (10) dans le piston de frein (33) creux et y étant fixée d'une manière amovible.

5. Frein à disque suivant l'une des revendications précédentes, **caractérisé en ce que** la plaquette de support (8) de la garniture de frein (6, 7) comporte deux saillies (11, 12) en L qui se dressent dans des sens opposés suivant la direction circonférentielle et par lesquelles la garniture de frein (6, 7) est appliquée avec jeu entre les bras porteurs (1, 2) du support de frein intégré et **en ce qu'**aussi bien les saillies (11, 12) que les bras porteurs (1, 2) sont pourvus de surfaces inclinées (15, 18) en appui les unes sur les autres, de sorte que, dans les limites du jeu, la garniture de frein (6, 7) est déplacée en rotation autour d'un axe perpendiculaire à la plaquette de support (8) avec un faible déplacement suivant la direction circonférentielle.

6. Frein à disque suivant la revendication 5, **caractérisé en ce que**, lorsque le frein n'est pas actionné, la garniture de frein (6, 7) est centrée entre les bras porteurs (1 et 2), au milieu de la zone préfixée du fait du jeu, au moyen de précontraintes des pattes d'ancrage (24, 25) s'exerçant dans des sens opposés suivant la direction circonférentielle.
